(19) **Europäisches Patentamt**
**European Patent Office**
**Office européen des brevets**

(11) **EP 4 589 332 A1**

(12) **EUROPEAN PATENT APPLICATION**

(43) Date of publication:
**23.07.2025 Bulletin 2025/30**

(21) Application number: **24152355.4**

(22) Date of filing: **17.01.2024**

(51) International Patent Classification (IPC):
*G01S 7/40* (2006.01)     *G01S 13/02* (2006.01)
*G01S 13/87* (2006.01)     *H04W 24/00* (2009.01)
*G01S 7/00* (2006.01)     *G01S 13/10* (2006.01)
*G01S 13/76* (2006.01)

(52) Cooperative Patent Classification (CPC):
**G01S 7/4008; G01S 7/4017; G01S 7/4021;**
**G01S 7/4069; G01S 13/0209; G01S 13/878;**
**H04W 24/00;** G01S 7/006; G01S 13/10;
G01S 13/765; G01S 2013/0254

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **Tertinek, Stefan**
**5656 AG Eindhoven (NL)**

• **Lugitsch, David**
**5656 AG Eindhoven (NL)**

(74) Representative: **Krott, Michel**
**NXP B.V.**
**Intellectual Property & Licensing**
**High Tech Campus 60**
**5656 AG Eindhoven (NL)**

Remarks:
Amended claims in accordance with Rule 137(2)
EPC.

(54) **RF DEVICE WITH A COMMUNICATION MISMATCH SELF-CALIBRATION**

(57)     There is described a radio frequency, RF, device (100), comprising:
i) a first portion (110), comprising:
ia) a first antenna (113),
ib) a first transmitter (111), coupled to the first antenna (113), and configured to transmit a first RF signal via the first antenna (113), and
ic) a first receiver (112), coupled to the first antenna (113), and configured to receive the first RF signal and a second RF signal via the first antenna (113);

ii) a second portion (120), comprising:
iia) a second antenna (123),
iib) a second transmitter (121), coupled to the second antenna (123), and configured to transmit the second RF signal via the second antenna (123), and
iic) a second receiver (122), coupled to the second antenna (123), and configured to receive the first RF signal and the second RF signal via the second antenna (123); and

iii) a control device, configured to:
a) determine a variation between the first transmitter (111) and the second transmitter (121) and/or the first receiver (112) and the second receiver (122) based on

the first RF signal received at the first receiver (112) and the second receiver (122), and
the second RF signal received at the first receiver (112) and the second receiver (122), and

b) compensate for the variation based on the determined variation.

Fig. 1

**Description**

TECHNICAL FIELD

The present disclosure relates to a radio frequency (RF) device with two portions, wherein each portion comprises an antenna coupled to a respective transmitter and receiver. The RF device further comprises a control device configured to determine a variation (in particular a mismatch such as a phase difference) between the transmitters and/or the receivers. An accordingly determined variation may then be compensated, thereby calibrating the transmitters and/or the receivers. The disclosure further relates to a method of operating such an RF device. The disclosure may hence relate to the technical field of RF devices, in particular ultra-wide band (UWB) radar applications.

TECHNICAL BACKGROUND

Radar operations apply radio frequency (RF) signals/waves to determine properties such as distance, angle, or velocity of a target (object or person or vehicle of interest). Thereby, a transmitter emits an RF signal towards the target, while one or more receivers obtain a reflection (an echo) of the RF signal that has been reflected by the target. For example, the ultra-wideband (UWB) wireless technology enables secure, accurate ranging with less than 5 cm accuracy.

Precise localization and tracking of objects such as a person is of great interest for a variety of applications including the Internet-of Things, smart home, entertainment, and vehicle access. Further, the monitoring of vital signs (e.g. of a driver) may be considered a highly relevant application. Ultra-wideband devices are becoming the preferred choice for these applications as their existing ranging mode can be extended by a radar (or sensing) mode, allowing the devices to accurately track the distance, angle and velocity of an object.

To improve the tracking precision and reject radio interference or reflections from the environment at multiple angles, UWB devices can perform a transmitter-based (radar) beam forming, where a radio-frequency beam is transmitted along a beam axis to a target (e.g. a driver in a vehicle).

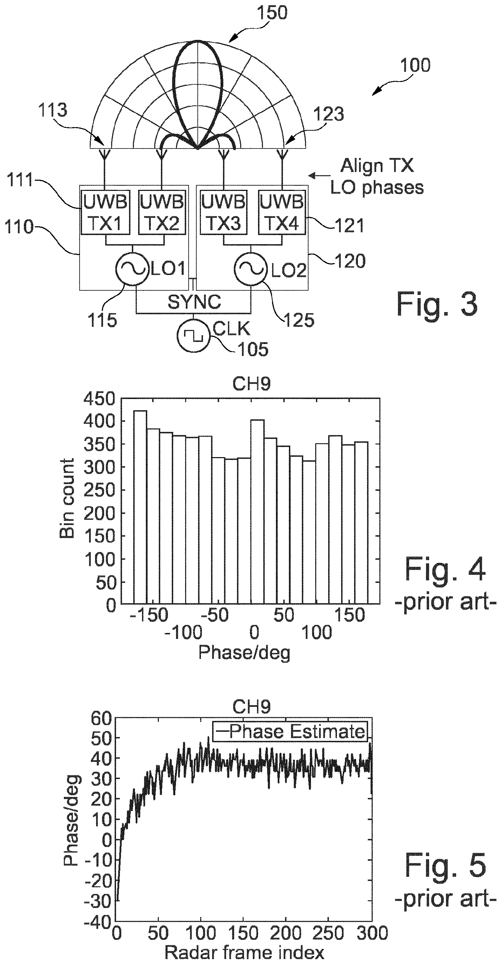

**Figure** 3 shows an example of a beamforming architecture. The disclosure described further below may be implemented into such an RF device 100. Said device 100 (e.g. a module) comprises two portions 110, 120 (radar devices, e.g. chips), each with two (on-chip) transmitters (111, TX1, TX2) (121, TX3, TX4) driven by a corresponding local oscillator (LO) 115, 125. Each transmitter is coupled to a respective antenna 113, 123. Each antenna 113, 123 may be further coupled to a (co-located) receiver (not shown in Figure 3).

The local oscillator circuits 115, 125 generate the carrier frequency (e.g. UWB channel 9) and comprise for example fractional-N phase-locked loops (PLLs). To remove a carrier frequency offset, the two LOs 115, 125 share a common reference clock (CLK) 105 (e.g. 55.2 MHz). An external synchronization (SYNC) signal can be used to simultaneously start the transmitter operation. Before the radar beam 150 can be formed and steered to a certain direction (angle), the transmitter local oscillator phases need to be aligned (at the respective antenna). For example, if all the phases are the same (no mismatch), the radar beam 150 will point to boresight as seen in Figure 3.

However, there can be multiple (chip) impairments causing the transmitter local oscillator phases to mismatch/-misalign (thus causing a variation):

i) Unknown delays, e.g. delay from the CLK to the LO inputs and from the internal TX to the chip pin, all of which depend on process, temperature etc.; and/or delay from the chip pin to the antenna.
ii) LO phase drift, e.g. the phases between the LOs can drift due to temperature etc., particularly when the LOs are on different portions/chips as in Figure 3.
iii) LO phase offset, e.g. when the TXs and the LOs are not started at the same time there will be a phase offset, caused mainly by the fractional-N PLLs.

To illustrate the transmitter local oscillator phase alignment problem, **Figures 4 and 5** show measurements of a dual radar set-up with a shared clock and two transmitters on different chips. This set-up can correspond to the transmitters TX1 and TX3 in Figure 3.

**Figure 4:** RF-PLLs in fractional mode (measured LO phase uncertainty (PLL fractional mode)): as both PLLs are in fractional mode and the start of the two LOs is not fully synchronized, there will be a random LO phase difference as seen by the histogram (uniform distribution over [-180, 180] deg).

**Figure 5:** RF-PLLs in integer mode (phase drift): the random phase difference may be mitigated by operating the RF-PLLs in integer mode but now a temperature-dependent drift between the two LO phases is seen. If left uncompensated, the transmitter local oscillator phase misalignment may cause a significant beam forming error.

SUMMARY OF THE DISCLOSURE

There may be a need to determine/compensate for an RF communication (transmitter and/or receiver) variation (in particular a delay or a phase variation) in an efficient and reliable manner. An RF device and methods are provided.

According to an aspect of the present disclosure, it is described a radio frequency (RF) device (e.g. a module with an UWB functionality), comprising:

i) a first portion (e.g. a first antenna chip, a specific region of the device), comprising:

ia) a first antenna,
ib) a first transmitter, coupled to the first antenna, and configured to transmit a first RF signal (via the first antenna), and
ic) a first receiver, coupled to the first antenna, and configured to receive the first RF signal and a second RF signal (via the first antenna) (in particular the first transmitter and the first receiver are co-located at the first portion);

ii) a second portion (e.g. a second antenna chip, a specific region of the device), comprising:

iia) a second antenna,
iib) a second transmitter, coupled to the second antenna, and configured to transmit the second RF signal (via the second antenna), and
iic) a second receiver, coupled to the second antenna, and configured to receive the first RF signal and the second RF signal (via the second antenna) (in particular the second transmitter and the second receiver are co-located at the second portion); and

iii) a control device (e.g. a processor, an integrated circuit, a controller, a hardware and/or a software), configured to:

determine a (transmitter and/or receiver) variation (mismatch, e.g. phase difference) between the first transmitter and the second transmitter and/or
the first receiver and the second receiver,
based on
the first RF signal received at the first receiver and the second receiver, and
the second RF signal received at the first receiver and the second receiver (e.g. by combining variation information obtained from these measurements).

In particular, the control device is further configured to compensate for the variation based on the determined variation (thereby calibrating the transmitters and/or receivers).

According to a further aspect of the present disclosure, it is described a method for operating (determining (and in particular compensating for) a variation in) a radio frequency device (e.g. as described above), in particular wherein a first transmitter and a first receiver are coupled to a first antenna, and wherein a second transmitter and a second receiver are coupled to a second antenna, the method comprising:

i) transmitting a first RF signal by the first transmitter;
ii) transmitting a second RF signal by the second transmitter;
iii) receiving the first RF signal and the second RF signal at the first receiver;
iv) receiving the first RF signal and the second RF signal at the second receiver;
v) determining a variation between the first transmitter and the second transmitter and/or

the first receiver and the second receiver based on
the first RF signal received at the first receiver and the second receiver and
the second RF signal received at the first receiver and the second receiver.

In particular, the method is further configured to compensate for the variation based on the determined variation.

According to a further aspect of the present disclosure, it is described a method of forming a beam with a radio frequency device (e.g. as described above), the method comprising:

i) compensating for a variation as described above (in other words: operating the RF device as described above); and then
ii) forming the beam using the first transmitter and the second transmitter.

In the present context, the term "variation" may in particular refer to a difference between two or more communication elements such as transmitters or receivers. Such a variation may be a e.g. mismatch, a misalignment or an offset. In an example, the variation may be a phase difference/offset, a delay, or a gain difference. In a first example, there may be a variation between a first transmitter and a second transmitter, e.g. a phase difference. In a second example, there may be a variation between a first receiver and a second receiver.

In the present context, the term "control device" may in particular refer to a hardware and/or software configured to perform the above specified steps of determining/compensating for a variation. The control device may be implemented as one or more processors/circuits. Further, the control device may be a controller of the RF device. The control device may be (at least partially) arranged in the RF device (e.g. a module for a vehicle, a smart phone, etc.) or may (at least partially) operate from remote.

In the present context, the term "antenna" may refer to a common RF antenna structure, configured to transmit and/or receive an RF signal. The antenna may interconnect transmitter and a co-located receiver. Thus, the transmitter may directly transmit an RF signal to the respective receiver via the antenna without that the RF signal is necessarily transmitted through the air.

According to an exemplary embodiment, the disclosure may be based on the idea that determining an RF communication (transmitter and/or receiver) variation (e.g. a delay or a phase variation) may be realized in an efficient and reliable manner, when a first transmitter sends a first RF signal to a first receiver and a second receiver, and a second transmitter sends a second RF signal to the first receiver and the second receiver, wherein the first transmitter and the first receiver are coupled to a common first antenna (co-located) and the second transmitter and the second receiver are coupled to a common second antenna (co-located). Each received RF signal provides a variation information, and a combination of said variation information may yield the transmitter variation and/or the receiver variation. For example a determined transmitter phase difference may then be used to calculate a corresponding transmitter local oscillator phase difference.

Hereby, it has been surprisingly found by the inventors that such a combination of variation information may cancel, due to the described symmetric set-up, the unnecessary information. For example, in case of a transmitter variation determination, self-interference and receiver variations may be cancelled, while in case of receiver variation determination, transmitter variation may be cancelled. Thus, the described disclosure may provide the specific advantage that no additional calibration may be necessary, for example in case of transmitter variation determination (and associated transmitter calibration), no receiver (delay) calibration would be necessary.

Advantageously, the described approach may be directly implemented into existing solutions in a straightforward manner.

The aspects defined above and further aspects of the disclosure are apparent from the examples of embodiment to be described hereinafter and are explained with reference to these examples of embodiment. The disclosure will be described in more detail hereinafter with reference to examples of embodiment but to which the disclosure is not limited.

EXEMPLARY EMBODIMENTS

In an embodiment, the variation comprises a delay and/or a phase and/or a gain. This may provide the advantage that variation information (information indicative for determining the variation) may be directly derived, e.g. from a channel impulse response (CIR). In an example, the disclosure may be implemented by computing or estimating delays instead of phases. For example, phases may be used if the receiver is placed at the baseband. In a further example, delays may be used if the receiver is placed at the RF path.

In an embodiment, the RF device further comprises: a first local oscillator associated/coupled with the first transmitter (or the first receiver) (at the first portion) and/or a second local oscillator associated/coupled with the second transmitter (or the second receiver) (at the second portion). In an embodiment, the control device is further configured to: determine a (transmitter/receiver) local oscillator variation based on the determined (transmitter/receiver) variation. In an embodiment, the control device is further configured to: compensate for the local oscillator variation, in particular by an alignment process.

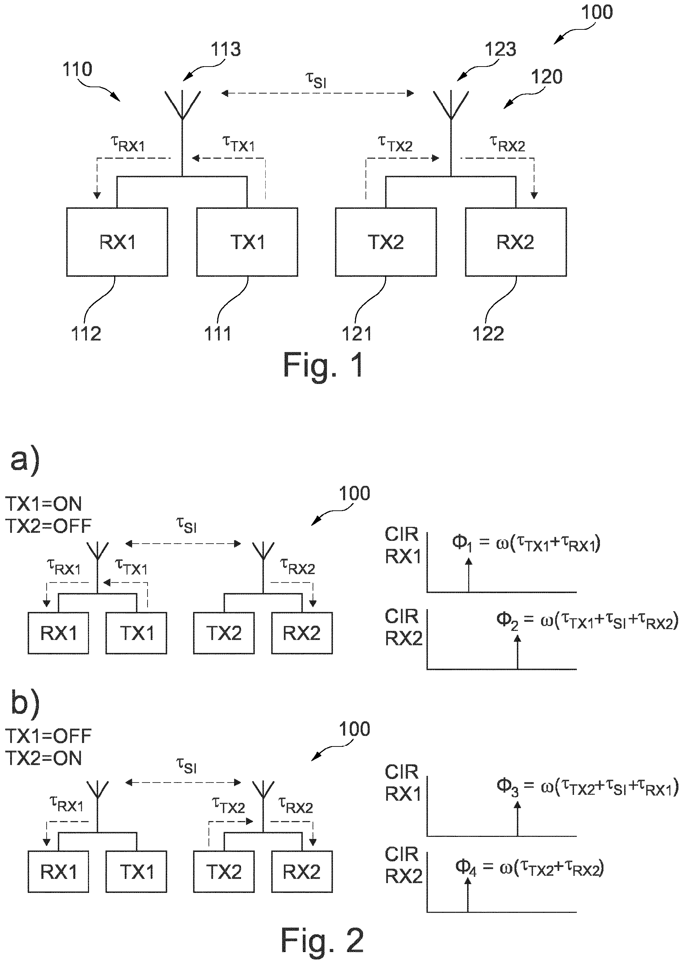

In an embodiment, the local oscillators (including the RF-PLLs) are kept on during the determination, in particular between a first step and a second step (compare Figures 2a and 2b below). Thereby, an additional phase uncertainty or ambiguity may be avoided.

In an embodiment, the control device is further configured to: determine a transmitter gain variation/mismatch and/or a receiver gain variation/mismatch based on the determined variation. In an embodiment, the control device is further configured to: compensate for the determined gain mismatch. The principle described for phase/delay variations may be used to compensate a transmitter/receiver gain mismatch as well. In an embodiment, the receiver variations comprise a gain-dependent delay.

In an embodiment, the first receiver is co-located with the first transmitter and/or the second receiver is co-located with the second transmitter. This may enable the symmetric set-up in a straightforward manner.

In an embodiment, the first portion and the second portion are formed as an array (in particular as part of an array) at/on the RF device. The array may be an antenna array, in particular for a beam forming application. The present disclosure may be used to calibrate the (plurality of) transmitters/receivers of said array.

In an embodiment, the first transmitter is turned off, when the second transmitter transmits the second RF signal. In an embodiment, the second transmitter is turned off, when the first transmitter transmits the first RF signal. In an embodiment, the first transmitter and the second transmitter transmit simultaneously. In some cases, the phase differences for example may be computed by operating the two transmitters simultaneously (TX1 = ON, TX2 = ON).

In an embodiment, the control device is further configured to at least one of the following: determine a first variation information ($\phi$1) based on the first RF signal received at the first receiver, determine a second variation information ($\phi$2) based on the first RF signal received at the second receiver, determine a third variation information ($\phi$3) based on the second RF signal received at the first receiver, and determine a fourth variation information ($\phi$4) based on the second RF signal received at the second receiver. These variation information may be directly combined in a suitable to obtain the desired variation information.

In an embodiment, the control device is further configured to: determine a first difference between the second variation information ($\phi$2) and the third variation information ($\phi$3), and determine a second difference between the first variation information ($\phi$1) and the fourth variation information ($\phi$4). As described in the following, these differences may be efficiently used to calculate different variation schemes. Yet, this step may be skipped, and the combination may be computed directly.

In an embodiment, the control device is further configured to: combine determined variation information ($\phi$1-4), in particular the first difference and the second difference, to determine the variation. Depending on the combination method, a transmitter variation or a receiver variation may be determined. Due to the cancellation of undesired information (such as self-interference), an efficient calibration may be implemented. A detailed example is described for Figures 2a and 2b below.

In an embodiment, transmitting the first RF signal to the second receiver includes a first self-interference and/or transmitting the second RF signal to the first receiver includes a second self-interference. In an embodiment, the self-interference is at least partially generated by a coupling between the first portion and the second portion. Such a self-interference may also be termed spill-over, cross-coupling, cross-talk, etc.

In an embodiment, the combination of the variation information cancels at least one of a self-interference, a transmitter variation, a receiver variation. In an embodiment, the determination of the variation with respect to a transmitter variation is free of a receiver calibration. In an embodiment, the determination of the variation with respect to a receiver variation is free of a transmitter calibration. A specific advantage of the present disclosure may be seen in an automatic cancellation of unnecessary information. Thereby, cost and effort may be saved (in particular regarding additional calibrations).

In an embodiment, the RF device is configured to perform a beam forming/steering using the first transmitter and the second transmitter. The variation compensation (calibration) such as phase alignment may be executed before the start of the actual beam forming, thereby eventually significantly improving the beam forming/steering performance.

In an embodiment, there is described a communication system, comprising:

  i) an RF device as described above, and
  ii) a target from which the first RF signal and/or the second RF signal is reflected, wherein the target is a mobile target or an immobile target.

In the context of the present document, the term "target" may refer in particular to an entity (e.g. an object, a person, an animal, etc.) to be investigated by radar, in particular regarding a spatial characteristic such as a position, a speed, an angle, etc. For determining the variation, it may be preferable to keep targets (in particular mobile targets) away in order to avoid interferences.

In an embodiment, the RF device, in particular the array, comprises more than two transmitters (compare e.g. Figure 3). The variation compensation (calibration) between any two transmitters may be done for example according to one of the following combination schemes:

  i) TX1-2; TX2-3; TX3-4; etc.
  ii) TX1-2; TX1-3; TX1-4; etc.

In an embodiment, the RF device is a radar device. According to an embodiment, the RF/radar device is an ultra-wide band, UWB, device. Thereby, an established and economically important standard can be directly applied.

In the context of the present document, the term "ultra-wide band communication" (or ultra-wideband) may refer to a radio technology that can use a very low energy level for short-range, high-bandwidth communications over a large portion of the radio spectrum. UWB may refer to a technology for transmitting information spread over a large bandwidth (> 500 MHz). UWB may be defined as an antenna transmission for which emitted signal bandwidth exceeds the lesser of 500 MHz or 20% of the arithmetic center frequency. UWB transmissions may transmit information by generating radio energy at specific time intervals and occupying a large bandwidth, thus enabling pulse-position or time modulation. The range of UWB may be for example in the range of $10^{th}$ of meters. An UWB (RF) ranging system may employ the Time-of-Flight principle to determine the distance between a mobile device and a target device (e.g. a car to be opened) and/or anchor devices (markers) on the target device. Usually, a transceiver's transmitter sends out a waveform, commonly a chirp or a pulse, which is either reflected by an object or retransmitted by a second transceiver. Based on the amount of time it takes for the reflection or retransmission to reach the originating transceiver's receiver, the distance between the objects can be calculated. The so determined range between the receiver and the transmitter is then used as a control point (to enable access). In the same manner, payload may be transferred using UWB. An UWB communication may for example include impulse-radio-ultra-wide band (IR-UWB) (see for example the standards IEEE802.15.4a and IEEE802.15.4z).

In another embodiment, another wireless communication scheme (in particular according to a standard) may be applied, for example WiFi, NFC, RFID, etc.

According to an embodiment, the RF signal comprises at least one pulse, in particular a sequence of pulses. A plurality of pulses (in particular a specific sequence of pulses) may be called a symbol. A plurality of symbols may be termed a packet.

According to an exemplary embodiment, a pulsed radar device (e.g. UWB radar device) transmits cyclically multiple radar packets with a defined repetition period. In general, the duration of a radar packet can be shorter than the repetition period of the radar packet. This can lead to a pause between the packets that can be used to switch off the carrier frequency generation to save energy. Each radar packet can consist of multiple symbols and one symbol consists of multiple pulses. The disclosure may use interchange of radar packets or parts of radar packets to estimate and finally to correct the phase offset between antennas. A specific aspect may be seen in exploiting the inherent signal symmetry of the transmitter pair arrangement and compute the transmitter LO phase difference (misalignment) from phase differences associated with collocated receivers, based on which a final compensation of the misalignment is done.

According to an exemplary embodiment, the disclosure may describe a method, wherein the LO phase difference between a pair of transmitters is determined based on a differential phase measurements using collocated receivers. In particular in (UWB) radar transmitter beamforming, the transmitter LO phases at the antenna are subject to multiple chip impairments (process, temperature, phase offset etc.), causing the radar beam to point to an unknown direction. Based on the present disclosure, this drawback may be compensated in an efficient manner.

According to an exemplary embodiment, the disclosure may comprise at least one of the following aspects:

i) determining a transmitter local oscillator (TX LO) phase difference between a pair of transmitters by using two collocated receivers,
ii) transmitting a signal from each transmitter, receiving the signal at each receiver, and determining a phase difference associated with the received signal,
iii) computing a TX LO phase difference from the phase differences associated with the received signals,
iv) correcting a TX LO phase based on the computed TX LO phase difference.

In an embodiment, the described method may be easy to detect in an RF device by sniffing the air interface with a coherent detector. It may be detected for example that two transmitters are switched on sequentially and that the LO phase changes. Furthermore, collocated receivers can be determined by inspection.

BRIEF DESCRIPTION OF THE DRAWINGS

Figure 1 illustrates a radio frequency device with two portions, according to an exemplary embodiment of the disclosure.
Figure 2a illustrates a first step of determining variation information with a first transmitter transmitting, according to an exemplary embodiment of the disclosure.
Figure 2b illustrates a second step of determining variation information with a second transmitter transmitting, according to an exemplary embodiment of the disclosure.
Figure 3 illustrates an RF device for beam forming, according to an exemplary embodiment of the disclosure.
Figure 4 illustrates a conventional local oscillator phase uncertainty.
Figure 5 illustrates a conventional local oscillator phase drift.

DETAILED DESCRIPTION OF THE DRAWINGS

Before referring to the drawings, embodiments will be described in further detail, some basic considerations will be summarized based on which embodiments of the disclosure have been developed.

**Figure 1** shows a radio frequency device 100 (dual radar set-up), according to an exemplary embodiment of the disclosure. The device 100 comprises a first portion 110 with a first antenna 113 coupled to a first transmitter 111 (configured to transmit a first RF signal via the first antenna 113) and a first receiver 112 (configured to receive the first RF signal and a second RF signal via the first antenna 113), i.e. the first transmitter 111 and the first receiver 112 are collocated. The device 100 comprises a second portion 120 with a second antenna 123 coupled to a second transmitter 121 (configured to transmit the second RF signal via the second antenna 123) and a second receiver 122 (configured to receive the second RF signal and the first RF signal via the second antenna 123), i.e. the second transmitter 121 and the second receiver 122 are collocated. The first portion 110 and the second portion 120 are formed on the device 100 for example in form (or as part of) an (antenna) array.

Figure 1 further illustrates the involved delays:

i) delays from transmitter TX1, TX2 to antenna: $\tau_{TX1}, \tau_{TX2}$,
ii) delays from antenna to receiver RX1, RX2: $\tau_{RXI}, \tau_{RX2}$, self-interference delay: $\tau_{SI}$. Self-interference (SI, also called spill-over, cross-coupling, cross-talk, own TX etc.) is caused by the coupling between transmitter and receiver.

The RF device 100 can now transmit:

i) the first RF signal by the first transmitter 111 to the first receiver 112 ($\tau_{TX1}$, $\tau_{RX1}$),
ii) the first RF signal by the first transmitter 111 to the second receiver 122 ($\tau_{TX1}$, $\tau_{RX2}$, $\tau_{SI}$),
iii) the second RF signal by the second transmitter 121 to the first receiver 112 ($\tau_{TX2}$, $\tau_{RX1}$, $\tau_{SI}$), and
iv) the second RF signal by the second transmitter 121 to the second receiver 122 ($\tau_{TX2}$, $\tau_{RX2}$). Based on variation information obtained by these measurements, a variation (e.g. phase mismatch) can be determined (for example as described in detail for Figures 2a and 2b below), between the first transmitter 111 and the second transmitter 121 and/or between the first receiver 112 and the second receiver 122. Based on the determined variation, a suitable compensation scheme (e.g. introducing a delay) may be applied.

**Figure 2a** illustrates a first step of determining a variation information with a first transmitter 111 transmitting, according to an exemplary embodiment of the disclosure:

i) The first transmitter 111 TX1 is turned on whereas the second transmitter 121 TX2 is turned off.
ii) The first receiver 112 RX1 receives the first RF signal from TX1 and estimates a first phase (first variation information): $\varphi_1 = \omega (\tau_{TX1} + \tau_{RX1})$.
iii) The second receiver 122 RX2 receives the first RF signal from TX1 (over the air, via the antennas 113, 123) and estimates a second phase (second variation information): $\varphi_2 = \omega (\tau_{TX1} + \tau_{SI} + \tau_{RX2})$.

**Figure 2b** illustrates a second step of determining a variation information with a second transmitter 121 transmitting, according to an exemplary embodiment of the disclosure.

i) the second transmitter 121 TX2 is turned on whereas the first transmitter 111 TX1 is turned off.
ii) The first receiver RX1 receives the second RF signal from TX2 (over the air via both antennas 113, 123) and estimates a third phase (third variation information): $\varphi_3 = \omega (\tau_{TX2} + \tau_{SI} + \tau_{RX1})$.
iii) The second receiver RX2 receives the second RF signal TX2 and estimates a fourth phase (fourth variation information): $\varphi_4 = \omega (\tau_{TX2} + \tau_{RX2})$.

Based on the determined first to fourth variation information (illustrated as channel impulse response (CIR) in Figures 2a and 2b), a first (phase) difference and a second (phase) difference can be calculated:

$$\varphi_2 - \varphi_3 = \omega (\tau_{TX1} + \tau_{SI} + \tau_{RX2}) - \omega (\tau_{TX2} + \tau_{SI} + \tau_{RX1})$$

$$= \omega (\tau_{TX1} - \tau_{TX2}) - \omega (\tau_{RX1} - \tau_{RX2})$$

$$\varphi_1 - \varphi_4 = \omega \left( \tau_{TX1} + \tau_{RX1} \right) - \omega \left( \tau_{TX2} + \tau_{RX2} \right)$$

$$= \omega \left( \tau_{TX1} - \tau_{TX2} \right) + \omega \left( \tau_{RX1} - \tau_{RX2} \right)$$

Hereby, the following should be noted:

i) The SI delay is completely cancelled, due to the symmetry of the measurements.
ii) The computed phase differences contain:

the transmitter TX phase difference $\omega \left( \tau_{TX1} - \tau_{TX2} \right)$ with the same sign, and
the receiver RX phase difference $\omega \left( \tau_{RX1} - \tau_{RX2} \right)$ with the opposite sign.

Using the determined variation information, in particular the determined differences, a transmitter variation (here phase difference) can be computed (adding (and scaling) the computed phase differences):

$$\tfrac{1}{2} \left( \left( \varphi_2 - \varphi_3 \right) + \left( \varphi_1 - \varphi_4 \right) \right) = \omega \left( \tau_{TX1} - \tau_{TX2} \right).$$

Hereby, it should be noted that:

i) The RX phase difference is completely cancelled, due to the (above mentioned) same/opposite sign behavior.
ii) The result is the desired TX phase difference $\omega \left( \tau_{TX1} - \tau_{TX2} \right)$, indicative of the transmitter local oscillator phase misalignment.

In another application, receiver (RX) beam forming may be implemented to determine the angle (or direction) of arrival of an RF signal/wave, e.g. impinging on an antenna array. For example, the RF signal may be a radar reflection from a target (e.g. a person), and the output signals of multiple RXs connected to the array are combined such that the angle of the target relative to the array can be determined. In one implementation, the beam forming architecture comprises four receivers which are on the same chip or on different chips, for example comparable to the transmitters of Figure 3. These receivers may be the same co-located receivers used for the calibration in the transmitter (beamforming) case.

If the delays through the multiple receivers differ, however, the angle of arrival determination may be inaccurate, leading to an inaccurate directional information of the target (e.g. the target may be determined to be at 30 deg instead of 20 deg).

To determine a receiver variation such as the phase (or delay) difference between two receiver local oscillators, the same method as described for the transmitter variation can be applied, comprising the same four variation information (phase) measurements, but combining them in a different manner as illustrated in the following:

$$\tfrac{1}{2} \left( \left( \varphi_1 - \varphi_4 \right) - \left( \varphi_2 - \varphi_3 \right) \right) = \omega \left( \tau_{RX1} - \tau_{RX2} \right).$$

As expected based on the considerations above, the self-interference and the transmitter variations is cancelled out.

In a final step, the determined variation (transmitter and/or receiver) can be compensated. For example, the transmitter local oscillator phases can be aligned based on the computed transmitter phase difference. In one example, the LO phase of either TX1 or TX2 is shifted relative to the other; e.g. by adding or subtracting an additional delay in the LO circuitry. Thereby, an efficient and reliable calibration may be enabled.

Reference signs

| | |
|---|---|
| 100 | RF device |
| 105 | Common reference clock |
| 110 | First portion |
| 111 | First transmitter |
| 112 | First receiver |
| 113 | First antenna |
| 115 | First local oscillator |
| 120 | Second portion |

121     Second transmitter
122     Second receiver
123     Second antenna
125     Second local oscillator
150     Radar beam

**Claims**

1. A radio frequency, RF, device (100), comprising:

    a first portion (110), comprising:

        a first antenna (113),
        a first transmitter (111), coupled to the first antenna (113), and configured to transmit a first RF signal,
        a first receiver (112), coupled to the first antenna (113), and configured to receive the first RF signal and a second RF signal;

    a second portion (120), comprising:

        a second antenna (123),
        a second transmitter (121), coupled to the second antenna (123), and configured to transmit the second RF signal,
        a second receiver (122), coupled to the second antenna (123), and configured to receive the first RF signal and the second RF signal; and

    a control device, configured to:

        a) determine a variation between at least one of

            the first transmitter (111) and the second transmitter (121),
            the first receiver (112) and the second receiver (122),
            based on
            the first RF signal received at the first receiver (112) and the second receiver (122), and
            the second RF signal received at the first receiver (112) and the second receiver (122), and

        b) compensate for the variation based on the determined variation.

2. The RF device (100) according to claim 1,
    wherein the variation comprises at least one of:

        a delay variation,
        a phase variation,
        a gain variation.

3. The RF device (100) according to one of the preceding claims, further comprising:

        a first local oscillator (115) associated with the first transmitter (111); and
        a second local oscillator (125) associated with the second transmitter (121);

    wherein the control device is further configured to:

        determine a local oscillator variation based on the determined variation, and
        compensate for the local oscillator variation.

4. The RF device (100) according to one of the preceding claims,
    wherein the first portion (110) and the second portion (120) are formed as an array on the RF device (100).

5. The RF device (100) according to one of the preceding claims,

wherein the first transmitter (111) is turned off, when the second transmitter (121) transmits the second RF signal, and

wherein the second transmitter (121) is turned off, when the first transmitter (111) transmits the first RF signal.

6. The RF device (100) according to one of the preceding claims 1 to 4,
   wherein the first transmitter (111) and the second transmitter (121) transmit simultaneously.

7. The RF device (100) according to one of the preceding claims, wherein the control device is configured for at least one of the following:

   determine a first variation information ($\phi$1) based on the first RF signal received at the first receiver (112);
   determine a second variation information ($\phi$2) based on the first RF signal received at the second receiver (122);
   determine a third variation information ($\phi$3) based on the second RF signal received at the first receiver (112); and
   determine a fourth variation information ($\phi$4) based on the second RF signal received at the second receiver (122).

8. The RF device (100) according to claim 7, wherein the control device is further configured to at least one of:

   determine a first difference between the second variation information ($\phi$2) and the third variation information ($\phi$3);
   determine a second difference between the first variation information ($\phi$1) and the fourth variation information ($\phi$4).

9. The RF device (100) according to one of the preceding claims, wherein the control device is further configured to:
   combine determined variation information ($\phi$1-4) to determine the variation.

10. The RF device (100) according to claim 9,

    wherein the combination of the variation information cancels at least one of
    a self-interference,
    a transmitter variation,
    a receiver variation.

11. The RF device (100) according to one of the preceding claims,

    wherein the determination of the variation with respect to a transmitter variation is free of a receiver calibration; or
    wherein the determination of the variation with respect to a receiver variation is free of a transmitter calibration.

12. The RF device (100) according to one of the preceding claims, comprising at least one of the following features:

    wherein the RF device (100) is an ultra-wide band, UWB, device;
    wherein the RF device (100) is a radar device.

13. The RF device (100) according to one of the preceding claims,
    wherein the RF device (100) is configured to perform a beam steering using the first transmitter (111) and the second transmitter (121).

14. A method for operating a radio frequency, RF, device (100), wherein a first transmitter (111) and a first receiver (112) are coupled to a first antenna (113), and wherein a second transmitter (121) and a second receiver (122) are coupled to a second antenna (123), the method comprising:

    transmitting a first RF signal by the first transmitter (111);
    transmitting a second RF signal by the second transmitter (121);
    receiving the first RF signal and the second RF signal at the first receiver (112);
    receiving the first RF signal and the second RF signal at the second receiver (122);
    determining a variation between at least one of

        the first transmitter (111) and the second transmitter (121),
        the first receiver (112) and the second receiver (122),

based on
the first RF signal received at the first receiver (112) and the second receiver (122), and
the second RF signal received at the first receiver (112) and the second receiver (122); and
compensating for the variation based on the determined variation.

15. A method of forming a beam with a radio frequency, RF, device (100), the method comprising:

compensating for a variation according to claim 14; and then
forming the beam using the first transmitter (111) and the second transmitter (121).

**Amended claims in accordance with Rule 137(2) EPC.**

1. A radio frequency, RF, device (100), comprising:

a first portion (110), comprising:

a first antenna (113),
a first transmitter (111), coupled to the first antenna (113), and configured to transmit a first RF signal,
a first receiver (112), coupled to the first antenna (113), and configured to receive the first RF signal and a second RF signal;

a second portion (120), comprising:

a second antenna (123),
a second transmitter (121), coupled to the second antenna (123), and configured to transmit the second RF signal,
a second receiver (122), coupled to the second antenna (123), and configured to receive the first RF signal and the second RF signal; and

a control device, configured to:

a) determine a variation between

the first transmitter (111) and the second transmitter (121),
the first receiver (112) and the second receiver (122),
based on
the first RF signal received at the first receiver (112) and the second receiver (122), and
the second RF signal received at the first receiver (112) and the second receiver (122), and

b) compensate for the variation based on the determined variation.

2. The RF device (100) according to claim 1,
wherein the variation comprises at least one of:

a delay variation,
a phase variation,
a gain variation.

3. The RF device (100) according to one of the preceding claims, further comprising:

a first local oscillator (115) associated with the first transmitter (111); and
a second local oscillator (125) associated with the second transmitter (121);

wherein the control device is further configured to:

determine a local oscillator variation based on the determined variation, and
compensate for the local oscillator variation.

4. The RF device (100) according to one of the preceding claims,
wherein the first portion (110) and the second portion (120) are formed as an array on the RF device (100).

5. The RF device (100) according to one of the preceding claims,

wherein the first transmitter (111) is turned off, when the second transmitter (121) transmits the second RF signal, and
wherein the second transmitter (121) is turned off, when the first transmitter (111) transmits the first RF signal.

6. The RF device (100) according to one of the preceding claims 1 to 4,
wherein the first transmitter (111) and the second transmitter (121) transmit simultaneously.

7. The RF device (100) according to one of the preceding claims, wherein the control device is configured for at least one of the following:

determine a first variation information ($\phi$1) based on the first RF signal received at the first receiver (112);
determine a second variation information ($\phi$2) based on the first RF signal received at the second receiver (122);
determine a third variation information ($\phi$3) based on the second RF signal received at the first receiver (112); and
determine a fourth variation information ($\phi$4) based on the second RF signal received at the second receiver (122).

8. The RF device (100) according to claim 7, wherein the control device is further configured to at least one of:

determine a first difference between the second variation information ($\phi$2) and the third variation information ($\phi$3);
determine a second difference between the first variation information ($\phi$1) and the fourth variation information ($\phi$4).

9. The RF device (100) according to one of the preceding claims, wherein the control device is further configured to:
combine determined variation information ($\phi$1-4) to determine the variation.

10. The RF device (100) according to claim 9,

wherein the combination of the variation information cancels at least one of a self-interference,
a transmitter variation,
a receiver variation.

11. The RF device (100) according to one of the preceding claims,

wherein the determination of the variation with respect to a transmitter variation is free of a receiver calibration; or
wherein the determination of the variation with respect to a receiver variation is free of a transmitter calibration.

12. The RF device (100) according to one of the preceding claims, comprising at least one of the following features:

wherein the RF device (100) is an ultra-wide band, UWB, device;
wherein the RF device (100) is a radar device.

13. The RF device (100) according to one of the preceding claims,
wherein the RF device (100) is configured to perform a beam steering using the first transmitter (111) and the second transmitter (121).

14. A method for operating a radio frequency, RF, device (100), wherein a first transmitter (111) and a first receiver (112) are coupled to a first antenna (113), and wherein a second transmitter (121) and a second receiver (122) are coupled to a second antenna (123), the method comprising:

transmitting a first RF signal by the first transmitter (111);
transmitting a second RF signal by the second transmitter (121);
receiving the first RF signal and the second RF signal at the first receiver (112);
receiving the first RF signal and the second RF signal at the second receiver (122);

determining a variation between
the first transmitter (111) and the second transmitter (121),
the first receiver (112) and the second receiver (122),
based on
the first RF signal received at the first receiver (112) and the second receiver (122), and the second RF signal received at the first receiver (112) and the second receiver (122); and
compensating for the variation based on the determined variation.

15. A method of forming a beam with a radio frequency, RF, device (100), the method comprising:

compensating for a variation according to claim 14; and then
forming the beam using the first transmitter (111) and the second transmitter (121).

Fig. 1

Fig. 2

Fig. 3

Fig. 4
-prior art-

Fig. 5
-prior art-

# EUROPEAN SEARCH REPORT

Application Number

EP 24 15 2355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/109403 A1 (FIKES AUSTIN C [US] ET AL) 6 April 2023 (2023-04-06) | 1-7,9-15 | INV. G01S7/40 |
| A | * paragraph [0003] - paragraph [0004] * <br> * paragraph [0007] * <br> * paragraph [0033] - paragraph [0035] * <br> * paragraph [0050] * <br> * paragraph [0058] - paragraph [0071] * <br> * figures 1-4 * | 8 | G01S13/02 G01S13/87 H04W24/00 <br><br> ADD. G01S7/00 G01S13/10 |
| X | US 2010/093282 A1 (MARTIKKALA RISTO [FI] ET AL) 15 April 2010 (2010-04-15) | 1,2,4-15 | G01S13/76 |
| A | * paragraph [0011] - paragraph [0012] * <br> * paragraph [0089] * <br> * paragraph [0095] * <br> * paragraph [0099] - paragraph [0101] * <br> * figures 1-8 * | 3 | |
| A | US 2014/242914 A1 (MONROE ROBERT WILLIAM [US]) 28 August 2014 (2014-08-28) <br> * paragraph [0002] * <br> * paragraph [0094] - paragraph [0111] * <br> * figures 1-24 * | 1-15 | |

TECHNICAL FIELDS SEARCHED (IPC)

G01S
H04W

The present search report has been drawn up for all claims

| Place of search | Date of completion of the search | Examiner |
|---|---|---|
| Munich | 10 June 2024 | Köppe, Maro |

EPO FORM 1503 03.82 (P04C01)

## ANNEX TO THE EUROPEAN SEARCH REPORT
## ON EUROPEAN PATENT APPLICATION NO.

EP 24 15 2355

This annex lists the patent family members relating to the patent documents cited in the above-mentioned European search report.
The members are as contained in the European Patent Office EDP file on
The European Patent Office is in no way liable for these particulars which are merely given for the purpose of information.

10-06-2024

| Patent document cited in search report | Publication date | Patent family member(s) | | Publication date |
|---|---|---|---|---|
| US 2023109403 A1 | 06-04-2023 | US | 2019140349 A1 | 09-05-2019 |
| | | US | 2023109403 A1 | 06-04-2023 |
| US 2010093282 A1 | 15-04-2010 | NONE | | |
| US 2014242914 A1 | 28-08-2014 | CN | 105075140 A | 18-11-2015 |
| | | EP | 2959607 A1 | 30-12-2015 |
| | | US | 2014242914 A1 | 28-08-2014 |
| | | WO | 2014129863 A1 | 28-08-2014 |

EPO FORM P0459

For more details about this annex : see Official Journal of the European Patent Office, No. 12/82